# EUROPEAN PATENT SPECIFICATION

(11) **EP 0 403 854 B1**
(45) Date of publication and mention of the grant of the patent: **04.08.1993**
(21) Application number: 90110400.0
(22) Date of filing: 31.05.1990
(51) Int. Cl.: B60J 10/04

(54) **Upright gasket for a vehicle descending window**
Vertikale Dichtung für ein absenkbares Kraftfahrzeugfenster
Joint d'étanchéité verticale pour fenêtre descendante pour véhicule

(30) Priority: 20.06.1989 IT 5318489
(43) Date of publication of application: 27.12.1990
(73) Proprietor: FIAT AUTO S.p.A., 10135 Torino (IT)
(72) Inventor: Rebuffo, Costanzo, I-10100 Torino (IT)
(74) Representative: Boggio, Luigi

(56) References cited:
- FR-A- 2 551 129

## Description

This invention relates to an upright gasket for the descending window of a vehicle door, ie a gasket to be installed in and along a door upright.

Descending window gaskets installed in the uprights of window apertures provided with such windows are required on the one hand to provide a seal against moisture and external inclement weather and on the other hand to limit the aerodynamic rustling noise which accompanies the vehicle movement. For this latter requirement, known upright gaskets such as e.g. that shown in FR-A-2551129, which are usually defined by a channel element with a U-shaped cross-section and constructed from at least one rubber blend, are provided not only with a seal lip but also with an external anti-rustle lip in sliding cooperation with the descending window, as in the case of the seal lip, and having preferably slippery sliding surfaces. In the case of descending windows without a guide frame (this being an increasingly more frequent case in modern vehicles), this external anti-rustle lip also exerts a lateral containing action on the descending window to limit its vibration, when the vehicle is in motion, deriving from the gaps arising due to inevitable manufacturing tolerance between the gasket and the window guide shoe which slides within said channel defined by the gasket. Unfortunately, this lip has proved totally inadequate for this containing purpose, especially if large gaps are present, with the result that the descending window vibrates and produces noise. In addition, known upright gaskets have also proved inadequate in receiving and retaining the window guide shoe, with the result that one or the other can suffer damage during assembly/ disassembly, and/or jamming can occur and overload the window regulator. Presence of inside ribs, such as projections 12 in FR-A-2551129 does not solve the aforementioned drawbacks.

An object of the invention is to provide an upright gasket for a vehicle descending window which is simple to produce and is able to effectively contain the descending window laterally when gaps exist between the gasket and window guide shoe without detriment to the hydraulic sealing action. A further object of the invention is to ensure that the lateral restraining action on the gasket is substantially independent of the tolerances involved in the construction of the channels and the door sheet metal with which the uprights are constructed for housing said gaskets when in use.

Said objects are attained according to the invention by an upright gasket for a descending window, particularly for a vehicle door, of the type recited in claim 1.

Further embodiments of the invention are referred to in the dependent claims.

The invention will be more apparent from the non-limiting description of two embodiments thereof given hereinafter with reference to the accompanying drawings in which:
Figure 1 is a perspective view of a motor vehicle door provided with the gasket according to the invention;
Figure 2 is section on the line II-II of the upright of the door of Figure 1;
Figure 3 is a perspective view of a motor vehicle door provided with a modified embodiment of the gasket according to the invention; and
Figure 4 is section on the line IV-IV of the upright of the door of Figure 3.

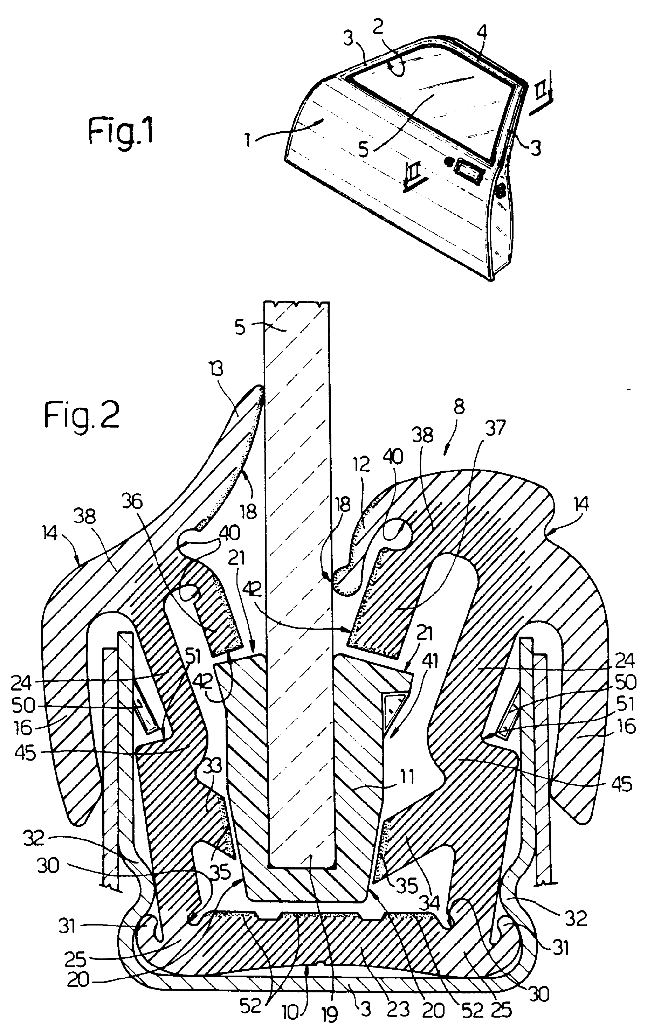

In Figures 1 and 2 the reference mural 1 indicates overall a door for any known vehicle, not shown for simplicity, comprising a window aperture 2 defined by respective uprights 3 and an upper cross-member 4 and housing in known manner a descending window 5 which when in use can be retracted into the interior of the door 1 by sliding along the rear upright 3 in order to open the window aperture 2.

The seal against moisture and dust and the lateral restraining of the window 5 are obtained by a gasket 8 which is pressed into the respective rear upright 3, as can be seen in Figure 2. The gasket 8 comprises a channel element 10 constructed of elastomer material and substantially of U cross-section to slidingly receive a guide and retention shoe 11 for the descending window 5, and a pair of elastically deformable opposing lips, namely a seal lip 12 and an antirustle lip 13, both of known type and each extending in a projecting manner from a respective longitudinal edge 14 of the channel element 10. The edges 14 define the opposing transverse ends of the channel element 10 and are provided on their outside with respective known inwardly-turning lips 16 arranged to sealingly cooperate with the exterior of uprights 3. The two known lips 12 and 13 extend in the opposite direction to the lips 16 and are preferably provided with slippery surfaces 18, by which they are able to cooperate slidingly with the descending window 5, which is guided in the upright 3 by the relative shoe 11. In the illustrated case the shoe 11 is rigidly mounted along an edge 19 of the window 5 and comprises respective oblique lateral end surfaces 20 and respective oblique longitudinal shoulder edges 21 sloping in the direction away from the surface of the window 5.

According to the invention the channel element 10 comprises respectively a base wall 23, a pair of opposing lateral walls 24 delimited upperly by the longitudinal edges 14, and respective connecting portions 25 between the base wall 23 and the lateral walls 24, said portions 25 being formed in such a manner as to act as hinges. Specifically, the channel element 10 is formed from at least two different material blends of different rigidity, each of which is used to form a particular portion of said element, as indicated in Figure 2 by different degrees of shading. In the present case, in order to enable them to act as hinges the portions 25 are formed from a blend of lesser rigidity and are also provided with undercut recesses 30 to produce a thinner cross-section at the point of maximum bending. Externally, the portions 25 are provided with bendable anchoring appendices 31 arranged to snap-cooperate with the relative upright 3 beyond respective shoulder bulges 32 of this latter. According to the invention the gasket 8 also comprises a pair of opposing elastically deformable lateral fins 33 and 34 which are provided integrally with the element 10 in proximity to the junction portions 25 but which in contrast to these later are formed from the blend of greater rigidity. Said fins 33, 34 project from the inside of the element 10, each extending obliquely from a respective lateral wall 24 towards the base wall 23, so that they converge towards this latter. Said fins 33, 34 are preferably provided with slippery ends 35 and are arranged to cooperate laterally with the shoe 11, and in particular with the oblique surfaces 20 thereof, towards which the fins 33, 34 face when in use, and of which the ends 35 have the same inclination.

According to a further embodiment of the invention the gasket 8 also comprises respective opposing second elastically deformable fins 36 and 37, which extend obliquely within the channel element 10 from respective root portions 38 of the lips 12, 13, in such a direction as to converge towards the bottom wall 23. The fins 36, 37 are formed from the same more rigid blend as used to form the fins 33, 34, as are the walls 24 and 23, and are arranged to snap-cooperate in the longitudinal direction with the guide and retention shoe 11, and in particular with the oblique shoulder edges 21 of this latter. In particular the root portions 38 of the lips 12, 13 are provided with respective undercut recesses 40 which facilitate the bending of the fins 36, 37 towards the lateral walls 24, and are disposed in such a position, relative to the fins 33, 34, as to define with these latter, when in use, a housing and restraining compartment 41 for the guide and retention shoe 11. The fins 36, 37 are also preferably provided with slippery surfaces 42 to facilitate the insertion and removal of the shoe 11.

The fins 33, 34 are asymmetrical and are provided in slightly asymmetric positions. Specifically, the fin 33 is shorter than the fin 34 and is formed slightly higher than this latter. Both are formed integrally with the lateral walls 24 at respective portions 45 thereof of S-shaped cross-section. In order to aid the sealing action of the gasket 8, the lips 12, 13 and 16 are formed from a mixture blend of low rigidity, such as the same blend as used for the portions 25, the snap-fitting of the gasket 8 into the upright 3 being possible not only because of the appendices 31 but also because of the provision of rigid oblique stops 50 provided rigid with the interior of the upright 3 and arranged to snap-engage respective concavities 51 defined on the outside of the element 10 by the portions 45. Finally, the base wall 23 is preferably provided on the inside of the element 10 with slippery longitudinal ribs 52.

For use, the described gasket 8 is inserted in known manner into the upright 3, where it remains snap-locked in position by virtue of the stops 50 and the appendices 31. The shoe 11 is then slidingly inserted into it by forcing the fins 36, 37 to flex and urging the edge 19 into the channel element 10. During this insertion, when the fins 36, 37 pass beyond the edges 21 they snap inwards by elastic effect to longitudinally lock the shoe 11 in its housing compartment 41. The fins 36 and 37 cooperate at this point with the edges 21 and consequently on the one hand provide a longitudinal restraining action for the window 5 in the window aperture 2, and on the other hand prevent accidental extraction of the shoe 11 from the sliding compartment 41, while at the same time because of their shape and elasticity preventing any danger of the shoe 11 jamming in the compartment 11. For their part, the fins 33 and 34 cooperate slackly and/or slidingly with the oblique surfaces 20, to perform an effective lateral retaining action on the window 5 within the aperture 2, this being independent of the manufacturing tolerance of the uprights 3 (channels and door sheet metal). In this respect, because they are elastic and positioned to project obliquely and, in particular, because they are formed as close as possible to the the hinge regions 25, the fins 33, 34 assume a position which depends only on the manufacturing tolerances of the overall gasket 8 and shoe 11. Consequently the fins 33, 34 are able at any given time to assume the most correct position for retaining and guiding the shoe 11, without any lessening of the sealing action, which is provided in normal known manner by the lips 12 and 13.

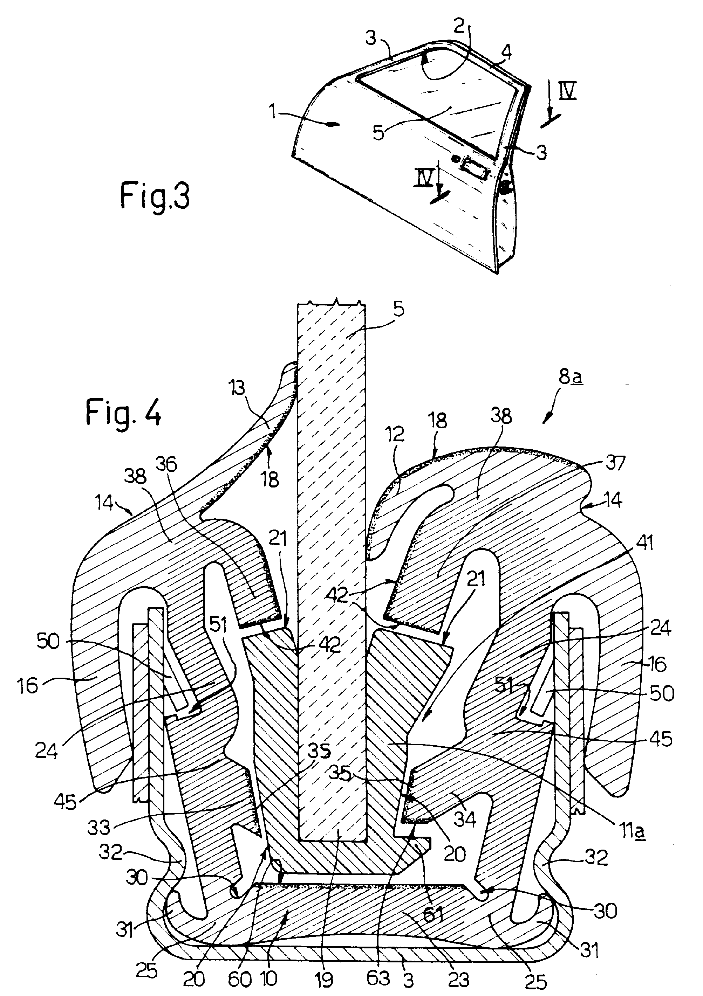

Figures 3 and 4 show the same door as Figure 1 but provided, at least in correspondence with the rear upright 3, with a gasket 8a which represents a modification of the gasket 8 shown in detail in the sectional view of Figure 2. With reference to the enlarged sectional view of Figure 4 in which parts similar or identical to those already described are indicated for simplicity by the same reference numerals, the gasket 8a differs from the gasket 8 only in just a few details. In particular, the lips 36 and 37 are shaped differently and are consequently without the undercuts 40, as are the lips 12 and 13, and the base wall 23 is without the slippery ribs 52, which are here replaced by a flocked or slippery surface 60, which entirely covers the base wall 23. The main difference from the gasket 8 is however the different shape of the guide and retention shoe for the window 5, and the consequently different shape and arrangement of the fins 33 and 34.

Specifically, the shoe 11 is replaced by a shoe 11a which differs from the preceding mainly by the presence of a right-angled shoulder protuberance 61 which projects laterally from that oblique surface 20 facing the fin 34. This latter has its slippery end 35 provided with a flat part 63 parallel to the slippery surface 60 of the base wall 23, and arranged to cooperate by snap action with protuberance 61. The fins 33 and 34, although again being of asymmetrical shape (the fin 33 being shorter than the fin 34), are disposed differently and in fact are disposed substantially symmetrically, being provided substantially at the same height on the walls 24.

These described modifications make the gasket 8a more easily to manufacture than the gasket 8, and in particular able more reliably to retain the shoe 11a after it has been snapped into the cavity 41, because of its different shape compared with the shoe 11. For the rest, the operation and method of mounting the gasket 8a are identical to that already described for the gasket 8.

## Claims

1. An upright gasket for a descending window, particularly for a vehicle door, said gasket comprising a channel element of elastomer construction with a substantially U-shaped cross-section and arranged to slidingly receive a guide and retention shoe (11) for the descending window, and a pair of opposing elastically deformable lips (12, 13) projecting from respective longitudinal edges of said channel element and arranged to slidingly cooperate with the descending window (5), wherein the channel element (10) comprises a base wall (23), a pair of opposing lateral walls (24) delimited by said longitudinal edges, a pair of opposing connecting portions (25) each connecting a respective said lateral wall (24) to said base wall (23), and a pair of opposing projections (33, 34) provided each on the inner side of a respective said lateral wall (24) and arranged to cooperate laterally with said shoe (11) in order to restrain it; **characterized** in that said connecting portions (25) of said channel element (10) are formed so as to have a rigidity lesser than that of both the base wall (23) and the lateral walls (24) so as to be able to act as hinges between these latter; in combination, said opposing projections formed on the lateral walls (24) being realized as elastically deformable fins (33,34) having a rigidity greater than that of the connecting portions (25) and projecting **f**rom the inside of the channel element (10), such extending obliquely from a respective lateral wall (24) towards the base wall (23), so that they converge towards this latter.

2. A gasket as claimed in Claim 1, characterized in that said channel element (10) is formed of at least two material blends of different rigidity, the elastically deformable fins (33,34) being formed, from a blend of greater rigidity and said connecting portions (25) being formed from the blend of lesser rigidity.

3. A gasket as claimed in claim 1 or 2, characterised by comprising respective opposing second elastically deformable fins (36, 37) projecting obliquely within said channel element from respective root portions (38) of said lips (12, 13) in a direction such that they converge towards said base wall (23), and arranged to cooperate in a longitudinal direction with said guide shoe (11) by snap action, in order to restrain it.

4. A gasket as claimed in claim 3, characterised in that said lip root portions are provided with respective undercut recesses (40) to facilitate the flexing of said second fins (36, 37) towards said lateral walls of the channel element.

5. A gasket as claimed in claim 3, characterised in that said first (33,34) and second (36,37) fins are provided in a mutually relative position such as to define when in use a housing and restraining compartment (41) for said guide and retention shoe (11).

6. A gasket as claimed in claim 3 or 5, characterised in that said elastically deformable fin (33, 34) arranged to cooperate laterally with said shoe are formed integrally with said lateral walls (24) of the channel element (10), in correspondence with respective S-shaped portions of these latter.

7. A gasket as claimed in one of claims 5 and 6, characterised in that said guide and retention shoe (11) is provided laterally with a right-angled projecting shoulder protuberance (61) arranged to cooperate with one (34) of said elastically deformable fins.

## Patentansprüche

1. Vertikale Dichtung für ein absenkbares Fenster, insbesondere für eine Fahrzeugtür, wobei diese Dichtung ein Kanalelement aus einem Elastomer-Aufbau mit einem im wesentlichen U-förmigen Querschnitt, das so angeordnet ist, daß es einen Führungs- und Halte-Gleitkörper (11) für das absenkbare Fenster gleitend aufnimmt, und ein Paar entgegengesetzter elastisch deformierbarer Lippen (12, 13) umfaßt, die von den entsprechenden Längskanten des Kanalelementes vorstehen und so angeordnet sind, daß sie gleitend mit dem absenkbaren Fenster (5) in Wechselwirkung stehen, wobei das Kanalelement (10) eine Basiswand (23), ein Paar entgegengesetzter Seitenwände (24), die durch diese Längskanten begrenzt werden, ein Paar entgegengesetzter Verbindungsabschnitte (25), die jeweils eine entsprechende Seitenwand (24) mit der Basiswand (23) verbinden, und ein Paar entgegengesetzter Vorsprünge (33, 34) umfaßt, die jeweils auf der Innenseite der entsprechenden Seitenwand (24) vorgesehen und so angeordnet sind, daß sie seitlich mit dem Gleitkörper (11) in Wechselwirkung stehen, um diesen zurückzuhalten, dadurch **gekennzeichnet,** daß die Verbindungsabschnitte (25) des Kanalelementes (10) so ausgebildet sind, daß ihre Steifigkeit geringer als die der Basiswand (23) als auch der Seitenwände (24) ist, so daß sie als Gelenke zwischen diesen wirken können; wobei in Kombination damit die entgegengesetzten Vorsprünge, die auf den Seitenwänden (24) ausgebildet sind, als elastisch deformierbare Rippen (33, 34) gestaltet sind, die eine größere Steifigkeit als die Verbindungsabschnitte (25) aufweisen und von der Innenseite des Kanalelements (10) vorstehen, so daß sie sich schräg von der entsprechenden Seitenwand (24) in Richtung der Basiswand (23) erstrecken, so daß sie in Richtung dieser Wand konvergieren.

2. Dichtung nach Anspruch 1, dadurch **gekennzeichnet,** daß das Kanalelement (10) aus zumindest zwei Materialmischungen mit unterschiedlicher Steifigkeit hergestellt ist, wobei die elastisch deformierbaren Rippen (33, 34) aus einer Mischung mit größerer Steifigkeit und die Verbindungsabschnitte (25) aus einer Mischung mit geringerer Steifigkeit gebildet wurden.

3. Dichtung nach Anspruch 1 oder 2, dadurch **gekennzeichnet,** daß sie entsprechende entgegengesetzte zweite elastisch deformierbare Rippen (36, 37) umfaßt, die schräg innerhalb des Kanalelementes von entsprechenden Fußpunkten (38) der Lippen (12, 13) in einer solchen Richtung vorstehen, daß sie in Richtung der Basiswand (23) konvergieren, und die so angeordnet sind, daß sie in Längsrichtung mit dem Führungs-Gleitkörper (11) durch einrastende Wirkung in Wechselwirkung stehen, um diesen zurückzuhalten.

4. Dichtung nach Anspruch 3, dadurch **gekennzeichnet,** daß die Fußpunkte der Lippen mit entsprechenden ausgeschnittenen Ausparungen (40) versehen sind, um das Biegen der zweiten Rippen (36, 37) in Richtung der Seitenwände des Kanalelementes zu erleichtern.

5. Dichtung nach Anspruch 3, dadurch **gekennzeichnet,** daß die ersten (33, 34) und zweiten (36, 37) Rippen in einer im Verhältnis zueinander wechselnden Position vorgesehen sind, so daß sie bei Verwendung eine aufnehmende und zurückhaltende Kammer (41) für den Führungs- und Halte-Gleitkörper (11) definieren.

6. Dichtung nach Anspruch 3 oder 5, dadurch **gekennzeichnet,** daß die elastisch deformierbaren Rippen (33, 34), die angeordnet sind, um seitlich mit dem Gleitkörper in Wechselwirkung zu stehen, einstückig mit den Seitenwänden (24) des Kanalelementes (10) entsprechend ihrer S-förmigen Abschnitte ausgebildet sind.

7. Dichtung nach einem der Ansprüche 5 und 6, dadurch **gekennzeichnet,** daß der Führungs- und Halte-Gleitkörper (11) seitlich mit einem rechtwinklig vorstehenden Ansatz (61) versehen ist, der so angeordnet ist, daß er mit einer (34) der elastisch deformierbaren Rippen in Wechselwirkung steht.

## Revendications

1. Joint de montant pour une vitre descendante , en particulier pour une porte de véhicule, ledit joint comprenant un profilé en élastomère à section transversale sensiblement en U et agencé pour recevoir de façon coulissante un patin de guidage et de retenue (11) pour la vitre descendante, et deux lèvres opposées élastiquement déformables (12,13) qui font saillie à partir des bords longitudinaux respectifs dudit profilé et peuvent coopérer de façon coulissante avec la vitre descendante (5), le profilé (10) comprenant une paroi de base (23), deux parois latérales opposées (24) délimitées par lesdits bords longitudinaux, deux parties de liaison opposées (25) reliant chacune unedite paroi latérale respective (24) à ladite paroi de base (23), et deux saillies opposées (33,34) prévues chacune sur la face intérieure d'une dite paroi latérale respective (24) et agencées pour coopérer latéralement avec ledit patin (11) afin de limiter son mouvement ; caractérisé en ce que lesdites parties de liaison (25) dudit profilé en U (10) sont fabriquées de manière à avoir une rigidité inférieure à celle de la paroi de base (23) et des parois latérales (24),afin de pouvoir agir comme des articulations entre ces dernières ; en combinaison, lesdites saillies opposées prévues sur les parois latérales (24) étant réalisées sous la forme d'ailettes élastiquement déformables (33,34) qui ont une rigidité plus grande que celle des parties de liaison (25) et qui font saillie à partir de la face intérieure du profilé en U (10), ces ailettes s'étendant obliquement à partir d'une paroi latérale respective (24), vers la paroi de base (23), de sorte qu'elles convergent vers cette dernière.

2. Joint suivant la revendication 1, caractérisé en ce que ledit profilé en U (10) est fabriqué à partir d'au moins deux mélanges de matière de rigidités différentes, les ailettes élastiquement déformables (33,34) étant fabriquées à partir d'un mélange de plus grande rigidité et lesdites parties de liaison (25) étant fabriquées à partir du mélange de plus faible rigidité.

3. Joint suivant la revendication 1 ou 2, caractérisé en ce qu'il comprend des deuxièmes ailettes élastiquement déformables opposées respectives (36,37) s'étendant obliquement à l'intérieur dudit profilé en U, à partir de régions de racine respectives (38) des dites lèvres (12,13), dans une direction telle qu'elles convergent vers ladite paroi de base (23),ces deuxièmes ailettes étant agencées pour coopérer dans une direction longitudinale avec ledit patin de guidage (11) par une action d'enclenchement, afin de limiter son mouvement.

4. Joint suivant la revendication 3, caractérisé en ce que lesdites régions de racine des lèvres comportent des évidements inférieurs respectifs (40) pour faciliter la flexion desdites deuxièmes ailettes (36,37) vers lesdites parois latérales du profilé en U.

5. Joint suivant la revendication 3, caractérisé en ce que lesdites premières (33,34) et deuxièmes (36,37) ailettes sont prévues dans une position mutuellement relative telle qu'elles définissent, lors de l'utilisation, un compartiment de réception et de retenue (41) pour ledit patin de guidage et de retenue (11).

6. Joint suivant la revendication 3, ou 5, caractérisé en ce que lesdites ailettes élastiquement déformables (33,34) agencées pour coopérer latéralement avec ledit patin sont formées solidairement avec lesdites parois latérales (24) du profilé en U (10), en correspondance avec des parties respectives en forme de S de ces dernières.

7. Joint suivant l'une des revendications 5 et 6, caractérisé en ce que ledit patin de guidage et de retenue (11) est pourvu latéralement d'une protubérance,formant un épaulement en saillie perpendiculaire (61), agencée pour coopérer avec une (34) desdites ailettes élastiquement déformables.
